(19) Europäisches Patentamt
European Patent Office
Office européen des brevets

(11) **EP 2 034 643 A2**

(12) **EUROPEAN PATENT APPLICATION**

(43) Date of publication:
**11.03.2009 Bulletin 2009/11**

(51) Int Cl.:
*H04J 3/06*$^{(2006.01)}$        *H04L 9/12*$^{(2006.01)}$

(21) Application number: **08160982.8**

(22) Date of filing: **23.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **04.09.2007 KR 20070089605**

(71) Applicant: **Electronics and Telecommunications Research Institute Daejeon-shi (KR)**

(72) Inventors:
• **Nam, Taek Jun Daejeon (KR)**
• **Seo, Myeong Won Daejeon (KR)**
• **Yi, Sang Yi Daejeon (KR)**

(74) Representative: **Betten & Resch Patentanwälte Theatinerstrasse 8 (Fünf Höfe) 80333 München (DE)**

(54) **Apparatus and method for synchronizing time information using key re-synchronization frame in encryption communications**

(57)    Provided are an apparatus and method for synchronizing time information of both transmitting and receiving side using a key re-synchronization frame in encryption communications that require algorithm synchronization. The apparatus for synchronizing time information using a key re-synchronization frame includes: a transmitter including an input unit for receiving a voice, a first vocoder for encoding the received voice, a frame generation unit for generating a frame with respect to the encoded voice data and a frame transmitting unit for transmitting the frame to a receiver; and the receiver including a frame receiving unit for receiving the frame transmitted from the transmitter, a frame analyzer for identifying a type of the received frame and analyzing information included in a key re-synchronization frame to calculate a time difference between a transmitting side and a receiving side, a second vocoder for decoding the voice data in the frame to be vocalized, and an output unit for outputting the vocalized

FIG. 1

**Description**

CROSS-REFERENCE TO RELATED APPLICATION

This application claims priority to and the benefit of Korean Patent Application No. 2007-89605, filed September 4, 2007, the disclosure of which is incorporated herein by reference in its entirety.

BACKGROUND

**1. Field of the Invention**

The present invention relates to an apparatus and method for synchronizing time information of both transmitting and receiving sides using a key re-synchronization frame in an encryption communication environment where algorithm synchronization should be maintained. More particularly, the present invention relates to an apparatus and method for synchronizing time information of both transmitting and receiving sides, in which average delay time in a network is calculated using time information when a transmitting side transmits using a key re-synchronization frame, time information when a receiving side receives the key re-synchronization frame and the number of data frames between key re-synchronization frames to calculate a time difference between both transmitting and receiving sides using the calculated results.

**2. Discussion of Related Art**

Conventionally, a GPS technique has been used to synchronize time information between equipment in remote places. That is, a GPS receiver is additionally connected to equipment requiring time information synchronization and identical time information is received from a GPS source to set local time information of the equipment in remote places.
According to the conventional art, since a device such as the GPS receiver is additionally connected, cost is increased and when target equipment is installed in a closed place such as in a container or under water where a GPS signal cannot pass through, the device is useless.
In particular, equipment used for encryption communication is generally used in a closed place or cannot be connected to a device such as a GPS for security. Therefore, to synchronize time information of transmitting and receiving equipment in such an environment, time information in the process of communication should be periodically exchanged. However, data exchange between transmitting equipment and receiving equipment in remote places causes data transmission delay, and thus time information exchanged between the transmitting equipment and the receiving equipment cannot be immediately used to synchronize time information of the transmitting and receiving equipment. Also, exchanging time information between the transmitting equipment and the receiving equipment may cause an overhead of the data communication.

SUMMARY OF THE INVENTION

The present invention is directed to an apparatus and method for synchronizing time information, which does not require an additional device and additional data transmission for synchronization of time information between equipment in remote places.
The present invention is also directed to an apparatus and method for synchronizing time information of transmitting and receiving sides using a key re-synchronization frame, which periodically uses in encryption communications. One aspect of the present invention provides an apparatus for synchronizing time information using a key re-synchronization frame in encryption communications comprising: a transmitter including an input unit for receiving a voice, a first vocoder for encoding the received voice, a frame generation unit for generating a frame with respect to the encoded voice data and a frame transmitting unit for transmitting the frame to a receiver; and the receiver including a frame receiving unit for receiving the frame transmitted from the transmitter, a frame analyzer for identifying a type of the received frame and analyzing information included in a key re-synchronization frame to calculate a time difference between a transmitting side and a receiving side, a second vocoder for decoding the voice data in the frame to be vocalized, and an output unit for outputting the vocalized voice.
Another aspect of the present invention provides a method of synchronizing time information using a key re-synchronization frame in encryption communications, the method comprising: encoding an input voice to generate the encoded voice data; generating a frame with respect to the encoded voice data; transmitting the frame from a transmitter to a receiver; receiving, at the receiver, the frame transmitted from the transmitter; determining whether the received frame is a key re-synchronization frame or a data frame; and analyzing information included in the key re-synchronization frame and correcting local time of a receiving side based on the analyzed information when the received frame is determined as the key re-synchronization frame.

BRIEF DESCRIPTION OF THE DRAWINGS

The above and other features and advantages of the present invention will become more apparent to those of ordinary skill in the art by describing in detail exemplary embodiments thereof with reference to the attached drawings in which:

FIG. 1 illustrates the configuration of an apparatus for synchronizing time information of both transmitting and receiving sides using a key re-synchronization frame including a transmitter and a receiver according to an exemplary embodiment of the present invention;

FIG. 2 is a flowchart illustrating a process performed by a transmitter in an apparatus for synchronizing time information of both transmitting and receiving sides using a key re-synchronization frame according to an exemplary embodiment of the present invention;

FIG. 3 is a flowchart illustrating a process performed by a receiver in an apparatus for synchronizing time information of both transmitting and receiving sides using a key re-synchronization frame according to an exemplary embodiment of the present invention; and

FIG. 4 schematically illustrates a method of correcting time information of a receiving side by calculating an average transmission delay value to calculate a time difference between transmitting and receiving sides.

DETAILED DESCRIPTION OF EMBODIMENTS

The present invention will now be described more fully hereinafter with reference to the accompanying drawings, in which exemplary embodiments of the invention are shown. This invention may, however, be embodied in different forms and should not be construed as limited to the exemplary embodiments set forth herein.

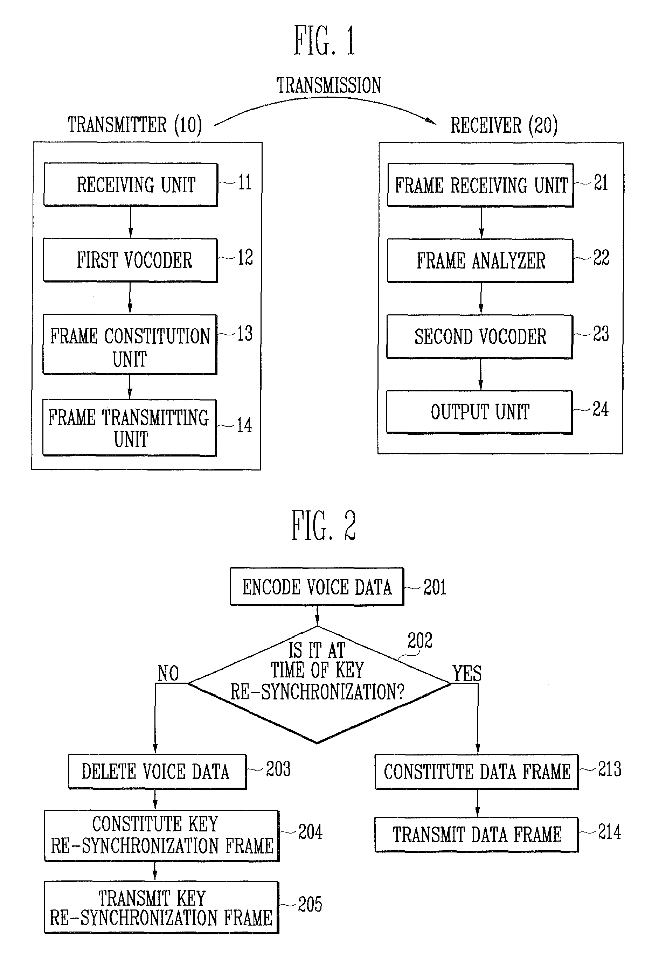

FIG. 1 illustrates the configuration of an apparatus for synchronizing time information of both transmitting and receiving sides using a key re-synchronization frame according to the present invention, and the apparatus includes a transmitter and a receiver.

The transmitter 10 includes a receiving unit 11 for receiving a voice, such as a microphone, a first vocoder 12 for vocoding the received voice to generate the encoded voice data, a frame generation unit 13 for generating a frame with respect to the encoded voice data, and a frame transmitting unit 14 for transmitting the frame to the receiver. The frame generation unit 13 generates a key re-synchronization frame including key re-synchronization information and time information of a transmitting side when it is at the time of key re-synchronization. Also, a header is added to the frame so that the frame to be transmitted can be recognized as the key re-synchronization frame to be distinguished from data frames. In contrast, when it is not at the time of key re-synchronization, the frame generation unit 13 generates a data frame formed of the voice data only.

The receiver 20 includes a frame receiving unit 21 for receiving the frame transmitted by the transmitter, a frame analyzer 22 for identifying the type of the received frame and analyzing information included in a key re-synchronization frame to calculate a time difference between transmitting and receiving sides, a second vocoder 23 for decoding the voice data to be vocalized, and an output unit 24 for outputting the vocalized voice.

The frame analyzer 22 analyzes the header of the received frame to determine whether the frame includes key re-synchronization information or not, so that the key re-synchronization frame is distinguished from the data frame.

When the received frame is a key re-synchronization frame, the frame analyzer 22 determines whether the received key re-synchronization frame is an odd-numbered frame or an even-numbered frame. When it is an odd-numbered frame, time information of the transmitting side included in the key re-synchronization frame is extracted, and the extracted time information of the transmitting side and time information of the receiving side receiving the key re-synchronization frame are stored in an internal memory (not shown) of the receiving side. In addition, when it is an even-numbered key re-synchronization frame, time information of the transmitting side included in the key re-synchronization frame is extracted, and an average transmission delay value is calculated using time information of the receiving side receiving the key re-synchronization frame, the number of data frames, and time information of the transmitting side and the receiving side with respect to a previous key re-synchronization frame stored in the internal memory (not shown). A time difference between the transmitting and receiving sides is calculated using the calculated average transmission delay value, and local time of the receiving side is corrected accordingly.

When the received frame is a data frame, the frame analyzer 22 transmits the data frame to the second vocoder 23, and the second vocoder 23 decodes the voice data to be vocalized and the output unit 24 outputs the voice.

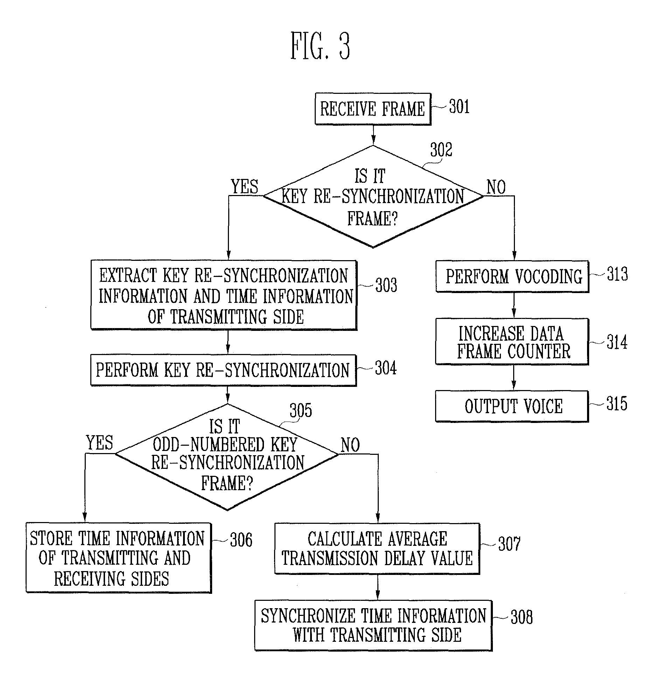

A method that can be embodied in the apparatus for synchronization according to the present invention will be described below with reference to FIGS. 2 and 3.

FIG. 2 is a flowchart illustrating a process performed by a transmitter in an apparatus for synchronizing time information of both transmitting and receiving sides using a key re-synchronization frame according to an exemplary embodiment of the present invention.

The voice received by a receiving unit such as a microphone is vocoded to be encoded into voice data (step 201). It is determined whether a frame to be transmitted is at the time of key re-synchronization (step 202).

When a frame to be transmitted is at the time of key re-synchronization, the corresponding current voice data is deleted (step 203). Next, key re-synchronization information for synchronizing a code algorithm and time information of the transmitting side for synchronizing time information are used to generate a key re-synchronization frame (step 204), and an identifier indicating the key re-synchronization frame is added to be transmitted to a receiver (step 205).

When it is determined that the frame to be transmitted is not at the time of key re-synchronization in step 202, voice data is used to generate a data frame (step 213), and an identifier indicating the data frame is added to be transmitted to the receiver (step 214).

FIG. 3 is a flowchart illustrating a process performed by a receiver in an apparatus for synchronizing time information of both transmitting and receiving sides using a key re-synchronization frame according to an exemplary embodiment of the present invention.

The receiver receives the frame transmitted by the transmitter (step 301), and a header of the received frame is analyzed to determine a type of the frame (step 302).

When the received frame is determined as a key re-synchronization frame in step 302, key re-synchronization information and information of the transmitting side are extracted from the key re-synchronization frame (step 303). Then, key re-synchronization is performed using the extracted key re-synchronization information (step 304) and it is determined whether the key re-synchronization frame is an odd-numbered key re-synchronization frame (step 305). When it is an odd-numbered key re-synchronization frame, the time information of the transmitting side extracted from the key re-synchronization frame and time information of the receiving side when the receiving side receives the key re-synchronization frame are stored in an internal memory of the receiving side (step 306). When it is determined that it is not an odd-numbered key re-synchronization frame in step 305, an average transmission delay value is calculated using time information of the transmitting side extracted from the received key re-synchronization frame, time information of the receiving side when the receiving side receives the key re-synchronization frame, the number of data frame counters (this will be described below), and time information of the transmitting and receiving sides stored with respect to a previous key re-synchronization frame (step 307). A time difference between the transmitting side and the receiving side is calculated from the calculated average transmission delay value, the calculated time difference is reflected, and local time of the receiving side is corrected to be synchronized with the time information of the receiving side (step 308).

When the received frame is determined as a data frame rather than a key re-synchronization frame in step 302, a voice data value is extracted to be vocoded (step 313), and 1 is added to a data frame counter variable value stored in the internal memory of the receiving side (step 314). Then, the voice data value is phonetically output (step 315).

Through the process described with reference to FIGS. 2 and 3, the receiving side calculates average transmission delay time between the transmitting and receiving sides using the time information of the transmitting side received through the key re-synchronization frame, the time information of the receiving side when it receives the key re-synchronization frame, and the number of data frames transmitted between key re-synchronization frames to calculate a time difference between the transmitting and receiving sides. Also, the local time of the receiving side is corrected using the calculated time difference to synchronize time information of both the transmitting and receiving sides.

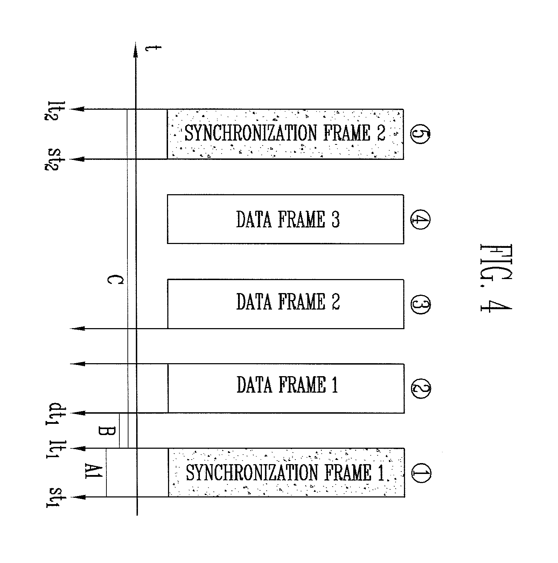

FIG. 4 schematically illustrates a method of correcting time information of a receiving side by calculating an average transmission delay value to calculate a time difference between transmitting and receiving sides according to an exemplary embodiment of the present invention.

Abbreviations shown in FIG. 4 will be defined as follows.

$st_n$: Time when a transmitting side transmits an nth key re-synchronization frame

$lt_n$: Time when a receiving side receives an nth key re-synchronization frame

$dt_n$: Time when the transmitting side transmits an nth data frame

An: Transmission delay time for an nth frame

B: Frame generation processing time (a constant value that is determined depending on system speed)

C: Synchronization frame interval time

D: Average transmission delay time for a frame

E: Time difference between transmitting and receiving sides

F: Corrected local time of the receiving side

In FIG. 4, it is assumed that frame ① and frame ⑤ are key re-synchronization frames. When it comes to the time of key re-synchronization, the transmitting side deletes voice data located in frame ① and frame ⑤ corresponding to key re-synchronization time to generate key re-synchronization frames ① and ⑤ using key re-synchronization information and time information of the transmitting side. The reconstituted frames are transmitted to the receiving side.

When the receiving side receives the key re-synchronization frame ①, it extracts time information $st_1$ of the transmitting side from the key re-synchronization frame. Time information $lt_1$ when the receiving side receives key re-synchronization frame ① is stored in an internal memory together with time information $st_1$ of the transmitting side. When the receiving side receives data frames ②, ③ and ④, the data is vocalized and 1 is added to a data frame counter variable value stored in the internal memory of the receiving side every time. When the receiving side receives key re-synchronization frame ⑤, it extracts time information $st_2$ of the transmitting side from key re-synchronization frame ⑤. An average transmission delay value is calculated using the extracted time information $st_2$, time information $lt_2$ when the receiving side receives key re-synchronization frame ⑤, a previous key re-synchronization frame, i.e., time information $st_1$ and $lt_1$ with respect to key re-synchronization frame ①, and a data frame counter variable value. When $A_1 = lt_1 - st_1$ (transmission delay time for frame ① is calculated at the time of $lt_1$, it is not guaranteed that time between the transmitting and receiving sides is always coincident, and thus $A_1$ cannot be used as a transmission delay value. Therefore, synchronization frame interval time C is used to calculate average transmission delay time D for a frame as follows:

$$C = (4B + A_2 + A_3 + A_4 + A_5) = (lt_2 - lt_1)$$

$$D = (lt_2 - lt_1)/4 = C/4$$

\* As illustrated in FIG. 4, the number of frames between synchronization frames 1 and 2 is 4.

The calculated frame average transmission delay time D is used to calculate time difference E between the transmitting and receiving sides as follows:

$$E = ((lt_1 - (st_1 + D)) + (lt_2 - (st_2 + D)))/2$$

In the above equation, the left side denotes a time difference between the transmitting and receiving sides in synchronization frame 1, and the right side denotes a time difference between the transmitting and receiving sides in synchronization frame 2. The calculated time difference E between the transmitting and receiving sides is used to calculate F to be used as local time of the receiving side as follows.

$$F = lt_2 - E - B$$

Since it is calculated in synchronization frame 2, $lt_2$ is used, and the calculated time F is used to set the local time of the receiving side, so that time information of the transmitting and receiving sides is synchronized.

According to the present invention, a key re-synchronization frame that is periodically used in an encryption communication is used to synchronize time information of transmitting and receiving apparatuses. Therefore, an additional device such as a GPS for synchronization is not required, thus reducing cost. Also, additional data transmission for time information synchronization is not required, so that system load can be lessened.

Exemplary embodiments of the invention are shown in the drawings and described above in specific terms. However, no part of the above disclosure is intended to limit the scope of the overall invention. It will be understood by those of ordinary skill in the art that various changes in form and details may be made to the exemplary embodiments without departing from the spirit and scope of the present invention as defined by the following claims.

**Claims**

1. An apparatus for synchronizing time information using a key re-synchronization frame in encryption communications, comprising:

   a transmitter including an input unit for receiving a voice, a first vocoder for encoding the received voice, a frame generation unit for generating a frame with respect to the encoded voice data and a frame transmitting unit for transmitting the frame to a receiver; and
   the receiver including a frame receiving unit for receiving the frame transmitted from the transmitter, a frame analyzer for identifying a type of the received frame and analyzing information included in a key re-synchronization frame to calculate a time difference between a transmitting side and a receiving side, a second vocoder for decoding the voice data in the frame to be vocalized, and an output unit for outputting the vocalized voice.

2. The apparatus of Claim 1, wherein, the frame generation unit generates the key re-synchronization frame including key re-synchronization information and time information of the transmitting side, when the frame to be transmitted is at the time of key re-synchronization, and generates a frame formed of the voice data only, when the frame to be transmitted is not at the time of key re-synchronization.

3. The apparatus of Claim 1 or 2, wherein when the received frame is determined as the key re-synchronization frame, the frame analyzer determines whether the key re-synchronization frame is an odd-numbered frame or an even-numbered frame.

4. The apparatus of Claim 3, wherein when the key re-synchronization frame is determined as an odd-numbered frame, the frame analyzer extracts time information of the transmitting side included in the key re-synchronization frame and stores the extracted time information of the transmitting side together with the time information of the receiving side at the time of receiving the key re-synchronization frame in an internal memory of the receiving side.

5. The apparatus of Claim 3, wherein when the key re-synchronization frame is determined as the even-numbered frame, the frame analyzer extracts time information of the transmitting side included in the key re-synchronization frame, calculates an average transmission delay time using the extracted time information of the transmitting side, time information of the receiving side at the time of receiving the key re-synchronization frame, the number of data frames, and time information of the transmitting and receiving sides with respect to a previous key re-synchronization frame stored in the internal memory, and calculates a time difference between the transmitting and receiving sides using the calculated results to correct local time of the receiving side accordingly.

6. The apparatus of one of Claims 1 to 5, wherein when the received frame is determined as a data frame, the frame analyzer forwards the data frame to the second vocoder.

7. A method of synchronizing time information using a key re-synchronization frame in encryption communications, the method comprising:

    encoding an input voice to generate the encoded voice data;
    generating a frame with respect to the encoded voice data;
    transmitting the frame from a transmitter to a receiver;
    receiving, at the receiver, the frame transmitted from the transmitter;
    determining whether the received frame is a key re-synchronization frame or a data frame; and
    analyzing information included in the key re-synchronization frame and correcting local time of a receiving side based on the analyzed information when the received frame is determined as the key re-synchronization frame.

8. The method of Claim 7, wherein the generating of the frame comprises generating the key re-synchronization frame using key re-synchronization information and time information of a transmitting side and adding a header to the key re-synchronization frame, the header used to identify the frame to be transmitted as a key re-synchronization frame, when the frame to be transmitted is at the time of key re-synchronization, and generating the data frame using voice data only when the frame to be transmitted is not at the time of key re-synchronization.

9. The method of Claim 7 or 8, further comprising, when the received frame is determined as a data frame, extracting and decoding the voice data in the frame to be vocalized; adding 1 to a data frame counter variable value stored in an internal memory of the receiving side; and outputting the vocalized voice.

10. The method of Claim 7, 8 or 9 wherein the correcting of the local time of the receiving side further comprises determining whether the key re-synchronization frame is an odd-numbered frame or an even-numbered frame.

11. The method of Claim 10, further comprising:

    when the key re-synchronization frame is determined as an odd-numbered frame,
    extracting time information of the transmitting side included in the key re-synchronization frame; and
    storing the extracted time information of the transmitting side together with time information of the receiving side at the time of receiving the key re-synchronization frame in an internal memory of the receiving side.

**12.** The method of Claim 10, further comprising:

when the key re-synchronization frame is determined as an even-numbered frame,
extracting time information of the transmitting side included in the key re-synchronization frame;
calculating an average transmission delay value using the extracted time information of the transmitting side, time information of the receiving side at the time of receiving the key re-synchronization frame, the number of data frames, and time information of the transmitting and receiving sides with respect to a previous key re-synchronization frame stored in an internal memory; and
calculating a time difference between the transmitting and receiving sides using the calculated average transmission delay value to correct local time of the receiving side using the calculated time difference.

# FIG. 1

TRANSMISSION

TRANSMITTER (10)

RECEIVER (20)

| RECEIVING UNIT | ~11 |

↓

| FIRST VOCODER | ~12 |

↓

| FRAME CONSTITUTION UNIT | ~13 |

↓

| FRAME TRANSMITTING UNIT | ~14 |

| FRAME RECEIVING UNIT | ~21 |

↓

| FRAME ANALYZER | ~22 |

↓

| SECOND VOCODER | ~23 |

↓

| OUTPUT UNIT | ~24 |

# FIG. 2

ENCODE VOICE DATA ~201

↓

IS IT AT TIME OF KEY RE-SYNCHRONIZATION? ~202

NO ← → YES

DELETE VOICE DATA ~203

↓

CONSTITUTE KEY RE-SYNCHRONIZATION FRAME ~204

↓

TRANSMIT KEY RE-SYNCHRONIZATION FRAME ~205

CONSTITUTE DATA FRAME ~213

↓

TRANSMIT DATA FRAME ~214

FIG. 3

RECEIVE FRAME — 301

302
IS IT
KEY RE-SYNCHRONIZATION
FRAME?

YES

NO

EXTRACT KEY RE-SYNCHRONIZATION
INFORMATION AND TIME INFORMATION
OF TRANSMITTING SIDE — 303

PERFORM VOCODING — 313

PERFORM KEY RE-SYNCHRONIZATION — 304

INCREASE DATA
FRAME COUNTER — 314

OUTPUT VOICE — 315

305
IS IT
ODD-NUMBERED KEY
RE-SYNCHRONIZATION
FRAME?

YES

NO

STORE TIME INFORMATION
OF TRANSMITTING AND
RECEIVING SIDES — 306

CALCULATE AVERAGE
TRANSMISSION DELAY VALUE — 307

SYNCHRONIZE TIME INFORMATION
WITH TRANSMITTING SIDE — 308

# FIG. 4

## REFERENCES CITED IN THE DESCRIPTION

**Patent documents cited in the description**

- KR 200789605